# EUROPÄISCHE PATENTSCHRIFT

(11) **EP 2 398 833 B1**
(45) Veröffentlichungstag und Bekanntmachung des Hinweises auf die Patenterteilung: **12.04.2017**
(21) Anmeldenummer: 10702881.3
(22) Anmeldetag: 09.02.2010
(51) Int. Cl.: C08F 4/56, C08F 36/04

(54) **INITIATORSYSTEM ZUR SYNTHESE VON HOCHVINYL-DIENKAUTSCHUKEN, EIN VERFAHREN ZUR HERSTELLUNG UND DESSEN VERWENDUNG ZUR HERSTELLUNG VON HOCHVINYL-DIENKAUTSCHUKEN**
INITIATOR SYSTEM FOR SYNTHESIZING HIGH-VINYL DIENE RUBBERS, A METHOD FOR PRODUCING HIGH-VINYL DIENE RUBBERS, AND USE THEREOF TO PRODUCE HIGH-VINYL DIENE RUBBERS
SYSTÈME INITIATEUR POUR LA SYNTHÈSE DE CAOUTCHOUCS DIÉNIQUES À HAUT VINYLE, PROCÉDÉ DE PRODUCTION ET SON UTILISATION POUR LA PRODUCTION DE CAOUTCHOUCS DIÉNIQUES À HAUT VINYLE

(30) Priorität: 18.02.2009 DE 102009009531
(43) Veröffentlichungstag der Anmeldung: 28.12.2011
(73) Patentinhaber: ARLANXEO Deutschland GmbH, 41540 Dormagen (DE)
(72) Erfinder: STEINHAUSER, Norbert, 40789 Monheim (DE)
(74) Vertreter: Wichmann, Birgid
(86) Internationale Anmeldenummer: PCT/EP2010/051532
(87) Internationale Veröffentlichungsnummer: WO 2010/094590

(56) Entgegenhaltungen:
- EP-A2- 1 205 495
- DE-A1- 10 243 618
- DE-B3- 10 240 790
- US-A- 5 654 384

## Beschreibung

Die vorliegende Erfindung betrifft ein Initiatorsystem zur Synthese von Hochvinyl-Dienkautschuken, ein Verfahren zur Herstellung und dessen Verwendung zur Herstellung von Dienhomo- und Diencopolymeren mit hohem Vinylgehalt bei hohen Polymerisationstemperaturen. Die so hergestellten Hochvinyl-Dienkautschuke eignen sich besonders zur Herstellung von Reifen.

Bei Reifen wird als eine wichtige Eigenschaft eine gute Haftung auf trockener und nasser Oberfläche angestrebt. Dabei ist es sehr schwer, die Rutschfestigkeit eines Reifens zu verbessern, ohne gleichzeitig den Rollwiderstand und die Abriebbeständigkeit zu verschlechtern. Ein niedriger Rollwiderstand ist für einen niedrigen Kraftstoffverbrauch von Bedeutung, und eine hohe Abriebbeständigkeit ist der entscheidende Faktor für eine hohe Lebensdauer des Reifens.

Nassrutschfestigkeit und Rollwiderstand eines Reifens hängen zum großen Teil von den dynamisch-mechanischen Eigenschaften der Kautschuke ab, die zum Bau des Reifens verwendet werden. Zur Erniedrigung des Rollwiderstands werden für die Reifenlauffläche Kautschuke mit einer hohen Rückprallelastizität bei höheren Temperaturen (60°C bis 100°C) eingesetzt. Andererseits sind zur Verbesserung der Nassrutschfestigkeit Kautschuke mit einem hohen Dämpfungsfaktor bei niedrigen Temperaturen (0°C) bzw. niedriger Rückprallelastizität im Bereich 0°C bis 23°C von Vorteil. Um dieses komplexe Anforderungsprofil zu erfüllen, werden Mischungen aus verschiedenen Kautschuken in der Lauffläche eingesetzt. Für gewöhnlich werden Mischungen aus einem oder mehreren Kautschuken mit einer relativ hohen Glasübergangstemperatur, wie Styrol-Butadien-Kautschuk, und einem oder mehreren Kautschuken mit relativ niedriger Glasübergangstemperatur, wie Polybutadien mit einem hohen 1,4-cis-Gehalt bzw. einem Styrol-Butadien-Kautschuk mit niedrigem Styrol- und geringem Vinylgehalt oder einem in Lösung hergestellten Polybutadien mit mittlerem 1,4-cis- und niedrigem Vinylgehalt verwendet.

Polybutadiene mit hohem Vinylgehalt (1,2-gebundenes Dien) sind literaturbekannt und eignen sich für die Herstellung von Reifenmischungen mit reduziertem Rollwiderstand und guter Nassrutschfestigkeit, wie z.B. in US-A 4 224 197 beschrieben. Die Herstellung von Polybutadienen mit hohem Vinylgehalt erfolgt bevorzugt durch anionische Lösungspolymerisation und erfordert die Verwendung von polaren Substanzen wie Ethern oder Aminen als Mikrostrukturregler bei der Polymerisation. Um in den für eine verbesserte Nassrutschfestigkeit interessanten Bereich von > 80 % Vinylgehalt zu kommen, muss die Polymerisation unter Verwendung der bekannten Mikrostrukturregler bei relativ niedrigen Temperaturen von unter 80°C durchgeführt werden. So verweist US 4 224 197 zur Synthese der in der Patentschrift beschriebenen Polybutadiene mit einem Vinylgehalt von > 80 % auf US3 301 840. Die dort beschriebenen Temperaturen zur Synthese der Polybutadiene mit Vinylgehalten > 80 % liegen bei 50°C und darunter, wobei außerdem große Mengen an Mikrostrukturreglern eingesetzt werden müssen. Niedrige Polymerisationstemperaturen sind jedoch wirtschaftlich nachteilig, da die Reaktionsmischung gekühlt und/oder der Feststoffgehalt der Reaktionsmischung erniedrigt werden muss, damit die Temperatur bei der Polymerisation nicht zu sehr ansteigt. Hohe Polymerisationstemperaturen sind dagegen von Vorteil, da auf eine aufwendige Kühlung ganz oder teilweise verzichtet und die Polymerisation mit höherem Feststoffgehalt durchgeführt werden kann, was in einer höheren Produktivität resultiert. Außerdem begünstigt eine hohe Polymerisationstemperatur bei der anionischen Lösungspolymerisation die Abtrennung des Lösungsmittels vom Kautschuk nach erfolgter Polymerisation. Die zusätzliche Verwendung von Natriumalkoxiden oder Natriumphenoxiden bei der anionischen Dienpolymerisation neben den bekannten Mikrostrukturreglern kann zu einer Erhöhung des Vinylgehaltes führen. So wird z. B. in US5 654 384 die anionische Polymerisation von Butadien unter Verwendung von Tetramethylethylendiamin als Mikrostrukturregler und Natrium-*tert*-amylat als Natriumalkoxid-Komponente bei einer Polymerisationstemperatur von 75°C beschrieben. Damit ließen sich Polybutadiene mit einem Vinylgehalt von 82-83 % und einer Glasübergangstemperatur von -27°C bis -28°C herstellen. Zur Verbesserung der Nassrutschfestigkeit sind jedoch Kautschuke von besonderem Interesse, die deutlich höhere Glasübergangstemperaturen aufweisen. EP1 205 495 beschreibt Modifizierungsmittel für die anionische Polymerisation von konjugierten Dienen mit vinylaromatischen Verbindungen, wobei die Modifizierungsmittel spezielle Aminoether darstellen. Als Initiatoren werden Organolithiumverbindungen gennant. Die Modifizierungsmittel können zusammen mit bekannten Randomizern bzw. Modifizierungsmitteln, z.B. Kaliumsalzen von Alkoholen eingesetzt werden. Die nach diesem Verfahren hergestellten Polymeren weisen einen unzureichenden Vinylgehalt und eine zu niedrige Glasübergangstemperatur auf. Es bestand die Aufgabe, ein neues Initiatorsystem bereitzustellen, das sich vor allem für die anionische Dienpolymerisation eignet, die Nachteile des Standes der Technik nicht aufweist und es ermöglicht, Polybutadiene mit hohem Vinylgehalt auch bei hohen Polymerisationstemperaturen herzustellen.

Es wurde jetzt überraschend gefunden, dass ein Initiatorsystem, umfassend (A) mindestens eine Organolithiumverbindung, (B) mindestens einen Di(aminoalkyl)ether und (C) mindestens ein Natriumalkoxid und/oder Natriumphenoxid, die Nachteile des Standes der Technik nicht aufweist und es vor allem ermöglicht Dienhomo- und Diencopolymere mit hohem Vinylgehalt bei hohen Polymerisationstemperaturen herzustellen. Zudem weisen die mit dem erfindungsgemäßen Initiatorsystem hergestellten Dienhomo- und Diencopolymere Glasübergangstemperaturen von mehr als -25°C, meist sogar von mehr als -20°C auf, was Vorteile bei der Nassrutschfestigkeit bringt.

Gegenstand der vorliegenden Erfindung ist daher ein Initiatorsystem für die anionische Polymerisation enthaltend (A) mindestens eine Organolithiumverbindung, (B) mindestens einen Di(aminoalkyl)ether und (C) mindestens ein Natriumalkoxid und/oder Natriumphenoxid.

Bei der Organolithiumverbindung (A) handelt es sich um mono-, di und/oder polyfunktionelle Verbindungen. Als monofunktionelle Verbindungen sind Verbindungen der Formel (I)

R-Li (I)

bevorzugt,
wobei R für einen gegebenenfalls substituierten Alkylrest mit 1 bis 32 C-Atomen, für einen gegebenenfalls substituierten, Cycloalkylrest mit 3 bis 32 C-Atomen oder für einen gegebenenfalls substituierten Arylrest mit 5 bis 36 C-Atomen steht, der gegebenenfalls ein oder mehrere Heteroatome enthalten kann. Vorzugsweise handelt es sich bei den Heteroatomen um Stickstoff, Sauerstoff und/oder Silizium. Darüber hinaus kann R für einen sekundären aliphatischen, cycloaliphatischen oder aromatischen Aminrest stehen.

Beispiele für solche Organolithiumverbindungen sind Methyllithium, Ethyllithium, Isopropyllithium, *n*-Butyllithium, *sec*-Butyllithium, Pentyllithium, *n*-Hexyllithium, Cyclohexyllithium, Octyllithium, Decyllithium, 2-(6-Lithio-*n*-hexoxy)tetrahydropyran, 3-(*tert-*Butyldimethylsiloxy)-1-propyllithium, Phenyllithium, 4-Butylphenyllithium, 1-Naphthyllithium, p-Toluyllithium und/oder Lithiumamide sekundärer Amine, wie Lithiumpyrrolidid, Lithiumpiperidid, Lithiumdiphenylamid. Bei den Organolithiumverbindungen (A) handelt es sich um handelsübliche Produkte oder sie lassen sich durch Umsetzung der entsprechenden Halogenide mit elementarem Lithium (siehe z.B. A. Streitwieser, C. H. Heathcock, Organische Chemie, Verlag Chemie, Weinheim 1980, Seiten 192-194) bzw. durch Umsetzung von sekundären Aminen mit Organolithiumverbindungen (siehe z.B. H. Beyer, Lehrbuch der Organischen Chemie, S. Hirzel Verlag, Stuttgart 1988, Seiten 185-186) herstellen. Die Lithiumamide können jedoch auch in situ durch Reaktion einer Organolithiumverbindung mit sekundären (sec) Aminen hergestellt werden.

Als di- und polyfunktionelle Organolithiumverbindungen eignen sich z.B. 1,4-Dilithiobutan, Dilithium-1,6-hexamethylendiamid, Dilithiumpiperazid. Bevorzugt werden *n*-Butyllithium und/oder *sec*-Butyllithium eingesetzt.

Als Di(aminoalkyl)ether (B) sind Verbindungen der allgemeinen Formel (II) bevorzugt 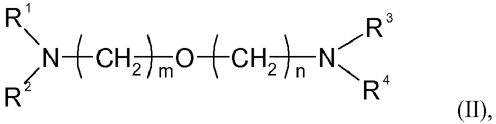 wobei
- R¹, R², R³, R⁴: gleich oder verschieden sind und für Alkylreste mit 1 bis 12, bevorzugt 1 bis 4 C-Atomen, Cycloalkylreste mit 3 bis 8, bevorzugt 5 bis 6 C-Atomen, Arylreste mit 6 bis 10, bevorzugt 6 C-Atomen und für Aralkylreste mit 7 bis 15, bevorzugt 7 bis 10 C-Atomen stehen,
- m, n: gleich oder verschieden sind und für ganze Zahlen von 1 bis 8, bevorzugt 1 bis 4 stehen.

Bevorzugt handelt es sich bei der Verbindung der Formel (II) um Bis-[2-(N,N-dimethylamino)ethyl]ether der nachstehenden Formel (IIa)

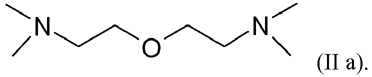

Die Di(aminoalkyl)ether (B) lassen sich nach literaturbekannten Methoden herstellen, wie z.B. in EP-A 297 296 beschrieben.

Das Natriumalkoxid und/oder Natriumphenoxid (C) weist die allgemeine Formel (III) auf

Na-OR' (III),

wobei es sich bei R' um einen linearen, verzweigten, gesättigten oder ungesättigten, gegebenenfalls substituierten C₁-C₃₀-Alkyl-, C₃-C₁₈-Cycloalkyl- oder C₆-C₁₈-Arylrest handelt, der gegebenenfalls ein oder mehrere Heteroatome aufweist. Bei den Heteroatomen handelt es sich vorzugsweise um Sauerstoff und/oder Stickstoff.

Beispiele für Verbindungen der Formel (III) sind Natriummethylat, Natriumethylat, Natrium-*n-*propylat, Natrium-*i*-propylat, Natrium-*n*-butylat, Natrium-*sec*-butylat, Natrium-*tert*-butylat, Natrium-*n*-pentylat, Natrium-*i*-pentylat, Natriumhexylat, Natriumcyclohexylat, Natrium-2,4-dimethyl-3-pentylat, Natriumoctylat, Natrium-2-ethylhexylat, Natriumdecylat, Natrium-3,7-dimethyl-3-octylat, Natriummentholat, Natriumtetrahydrofurfurylat, Natriumphenylat, Natrium-p-nonylphenylat und/oder Natrium-p-decylphenylat. Des Weiteren können auch Natriumalkoxide und Natriumphenoxide mehrwertiger Alkohole eingesetzt werden. Beispiele hierfür sind Dinatrium-1,6-hexdioxid und/oder Dinatrium- 2,2'-methylenbis[6-(1,1-dimethylethyl)-4-methyl]phenoxid.

Bei den Verbindungen der Formel (III) handelt es sich um handelsübliche Produkte oder sie lassen sich auf bekannte Weise durch Umsetzung der entsprechenden Alkohole und Phenole mit Natrium herstellen.

Das erfindungsgemäße Initiatorsystem enthält in einer Ausführungsform der Erfindung je einen Vertreter der Komponenten (A), (B) und (C). In einer weiteren Ausführungsform der Erfindung sind jedoch auch mehrere Vertreter der Komponenten (A), (B) und (C) vorhanden.

Besonders bevorzugt enthält das erfindungsgemäße Initiatorsystem als Komponente (A) *n-*Butyllithium und/oder *sec*-Butyllithium, als Komponente (B) Bis-[2-(N,N-dimethylamino)ethyl]ether der Formel (IIa) und als Komponente (C) Natrium-3,7-dimethyl-3-octylat und/oder Natriummentholat.

Darüber hinaus kann das erfindungsgemäße Initiatorsystem neben den Komponenten (A), (B) und (C) noch die literaturbekannten Randomizer zur Erhöhung des statistischen Einbaus der vinylaromatischen Comonomere bei der Diencopolymerisation enthalten, wie z.B. Kaliumalkoxide, Kaliumcarboxylate, Kaliumamide, Natriumsulfonate.

In einer weiteren Ausführungsform der Erfindung enthält das Initiatorsystem noch zusätzliche Mikrostrukturregler, wie z.B. Diethylether, Di-*n*-propylether, Diisopropylether, Di-*n*-butylether, Ethylenglykoldimethylether, Ethylenglykoldiethylether, Ethylengykoldi-*n*-butylether, Ethylengykoldi-*tert*-butylether, Diethylenglykoldimethylether, Diethylenglykoldiethylether, Diethylenglykoldi-*n*-butylether, Diethylenglykoldi-*tert*-butylether, 2-(2-Ethoxyethoxy)-2-methylpropan, Triethylenglykoldimethylether, Tetrahydrofuran, Ethyltetrahydrofurylether, Ditetrahydrofurylpropan, Dioxan, Trimethylamin, Triethylamin, N,N,N',N'-Tetramethylethylendiamin, N-Methylmorpholin, N-Ethylmorpholin, 1,2-Dipiperidinoethan, 1,2-Dipyrrolidinoethan und/oder 1,2-Dimorpholinoethan.

Das molare Verhältnis der Verbindung (B) zu Verbindung (A) beträgt 0,01:1 bis 100:1, bevorzugt 0,05:1 bis 10:1, ganz besonders bevorzugt 0,1:1 bis 3:1.

Das molare Verhältnis der Verbindung (C) zu Verbindung (B) beträgt 0,005:1 bis 100:1, bevorzugt 0,025:1 bis 20:1, ganz besonders bevorzugt 0,15:1 bis 2:1.

Das molare Verhältnis der Verbindung (C) zu Verbindung (A) beträgt bis 0,02:1 bis 50:1, bevorzugt 0,1:1 bis 10:1, ganz besonders bevorzugt 0,2:1 bis 2:1.

Gegenstand der Erfindung ist zudem die Herstellung des erfindungsgemäßen Initiatorsystems, wonach die Komponenten (A) bis (C) in beliebiger Reihenfolge vermischt werden. Das Vermischen der Komponenten findet dabei vorzugsweise bei Raumtemperatur statt.

Gegenstand der vorliegenden Erfindung ist auch ein Verfahren zur Herstellung von Dienhomo- und Diencopolymeren mit einem auf die Dienkomponente bezogenen Vinylgehalt von > 60 %, bevorzugt > 80 %, wonach die Diene und gegebenenfalls vinylaromatischen Comonomere mit dem erfindungsgemäßen Initiatorsystem umgesetzt werden.

Vorzugsweise wird das erfindungsgemäße Verfahren bei Polymerisationstemperaturen von > 60°C, bevorzugt > 75°C durchgeführt. Die Angabe der Polymerisationstemperatur umfasst auch Temperaturgradienten im Reaktor von 20 - 160°C. Es ist aber auch möglich unterhalb von 0°C, beispielsweise -20°C, zu starten.

Das erfindungsgemäße Verfahren kann auf mehreren Wegen durchgeführt werden. In einer Ausführungsform der Erfindung werden zunächst die Diene und gegebenenfalls vinylaromatischen Comonomere vorgelegt und anschließend das Initiatorsystem zugegeben.

In einer bevorzugten Ausführungsform der Erfindung werden zunächst die Monomere und/oder vinylaromatischen Comonomere vorgelegt und anschließend die einzelnen Komponenten des Initiatorsystems in beliebiger Reihenfolge zugegeben.

In einer bevorzugten Ausführungsform der Erfindung werden zunächst die einzelnen Komponenten (A) bis (C) des Initiatorsystems vorgelegt und anschließend die Diene und gegebenenfalls vinylaromatischen Comonomere zudosiert.

In einer bevorzugten Ausführungsform der Erfindung werden zunächst die einzelnen Komponenten des Initiatorsystems, wie z.B. (B) und/oder (C) vorgelegt und anschließend die Diene und gegebenenfalls vinylaromatischen Comonomere und danach Komponente (A) zugeführt.

In einer weiteren bevorzugten Ausführungsform werden die Komponenten (A) bis (C), die Diene und gegebenenfalls vinylaromatischen Comonomere sowie das Lösungsmittel kontinuierlich in den Reaktor dosiert.

Die Zufügung der Komponenten (B) und/oder (C) kann aber auch nach dem Start der Polymerisation erfolgen.

Als Diene sind 1,3-Butadien, Isopren, 1,3-Pentadien, 2,3-Dimethylbutadien, 1-Phenyl-1,3-butadien und/oder 1,3-Hexadien bevorzugt. Besonders bevorzugt werden 1,3-Butadien und/oder Isopren eingesetzt.

Als vinylaromatische Comonomere können z. B. Styrol, o-, m- und/oder p-Methylstyrol, p-*tert-*Butylstyrol, α-Methylstyrol, Vinylnaphthalin, Divinylbenzol, Trivinylbenzol und/oder Divinylnaphthalin verwendet werden. Besonders bevorzugt wird Styrol eingesetzt.

Besonders bevorzugt ist die Kombination aus 1,3-Butadien, Isopren, 1,3-Pentadien, 2,3-Dimethylbutadien, 1-Phenyl-1,3-butadien und/oder 1,3-Hexadien als Diene und Styrol, o-, mund/oder p-Methylstyrol, p-tert.-Butylstyrol, α-Methylstyrol, Vinylnaphthalin, Divinylbenzol, Trivinylbenzol und/oder Divinylnaphthalin als vinylaromatische Comonomere.

Das erfindungsgemäße Verfahren zur Herstellung von Dienhomo- und Diencopolymeren findet vorzugsweise in einem Lösungsmittel statt. Als Lösungsmittel für die anionische Polymerisation werden vorzugsweise inerte aprotische Lösungsmittel, wie z.B. paraffinische Kohlenwasserstoffe, wie isomere Pentane, Hexane, Heptane, Octane, Decane, Cyclopentan, Cyclohexan, Methylcyclohexan, Ethylcyclohexan oder 1,4-Dimethylcyclohexan oder aromatische Kohlenwasserstoffe, wie Benzol, Toluol, Ethylbenzol, Xylol, Diethylbenzol oder Propylbenzol eingesetzt. Diese Lösungsmittel können einzeln oder in Kombination verwendet werden. Bevorzugt sind Cyclohexan und n-Hexan. Ebenfalls möglich ist die Abmischung mit polaren Lösungsmitteln.

Die Menge an Lösungsmittel beträgt bei dem erfindungsgemäßen Verfahren üblicherweise 1000 bis 100 g, bevorzugt 700 bis 200 g, bezogen auf 100 g der gesamten Menge an eingesetztem Monomer. Es ist aber auch möglich, die eingesetzten Monomere in Abwesenheit von Lösungsmitteln zu polymerisieren.

Die Polymerisationszeit kann in breiten Bereichen von einigen Minuten bis zu einigen Stunden schwanken. Üblicherweise wird die Polymerisation innerhalb einer Zeitspanne von etwa 10 Minuten bis zu 8 Stunden, bevorzugt 30 Minuten bis 3 Stunden, durchgeführt. Sie kann sowohl bei Normaldruck als auch bei erhöhtem Druck (1 bis 10 bar) durchgeführt werden.

Nach erfolgter Polymerisation können die für die anionische Dienpolymerisation typischen Kopplungs- und/oder Funktionalisierungsreaktionen am anionischen Kettenende durchgeführt werden. Beispiele für Kopplungs- und/oder Funktionalisierungsreagenzien sind Siliciumtetrachlorid, Zinntetrachlorid, Glycidylether, Alkoxysilane, Cyclosiloxane, Aminob enzophenone.

Die mit dem erfindungsgemäßen Initiatorsystem hergestellten Dienhomopolymere und Diencopolymere haben üblicherweise mittlere Molgewichte (Zahlenmittel) von 10 000 bis 2 000 000 g/mol.

Ein weiterer Gegenstand der vorliegenden Erfindung ist die Verwendung des erfindungsgemäßen Initiatorsystems zur Herstellung von Dienhomo- und/oder Diencopolymeren mit einem auf die Dienkomponente bezogenen Vinylgehalt von > 60 %.

Die nachfolgenden Beispiele dienen der Erläuterung der Erfindung, ohne dabei limitierend zu wirken.

### Beispiele

### Beispiel 1A: Synthese von Polybutadien

In einem getrockneten und mit Stickstoff überlagerten 2L-Stahlreaktor wurden unter Rühren vorgelegt: 850 g Hexan, 1,74 mmol (BDMAEE) Bis-[2-(N,N-dimethylamino)ethyl]ether (B), 0,29 mmol (Na-DMO) Natrium-3,7-dimethyl-3-octylat (C) (als 50%-ige Lösung in Hexan), 150 g 1,3-Butadien, 0,58 mmol (BuLi) *n*-Butyllithium (A) (als 23%-ige Lösung in Hexan). Es wurde unter Rühren 60 Minuten auf 80°C erwärmt. Danach wurde die Kautschuklösung in Ethanol ausgefällt und mit 2,6-Di-tert-butyl-4-kresol (BHT) stabilisiert. Der ausgefällte Kautschuk wurde von Ethanol abgetrennt und 16 h im Vakuum bei 60°C getrocknet.

### Analys energebniss e:

Vinyl-Gehalt (IR-spektroskopisch): 94 Gew.-%
Glasübergangstemperatur Tg (DSC): -5°C
Mooney-Viskosität (ML1+4 bei 100°C): 95 Mooney-Einheiten

Die Beispiele 1B bis 1W wurden in entsprechender Weise mit den in Tabelle 1 angegebenen Initiatorsystemen, Polymerisationstemperaturen und Mengenverhältnissen durchgeführt.

Die erfindungsgemäßen Beispiele 1A bis 1I zeigen, dass mit dem erfindungsgemäßen Initiatorsystem Polybutadiene mit sehr hohem Vinylgehalt und sehr hoher Glasübergangstemperatur bei hohen Polymerisationstemperaturen hergestellt werden können. Mit den Vergleichssystemen der Beispiele 1J bis 1 W ist dies nicht zu erreichen.

### Beispiel 2A: Synthese eines Styrol-Butadien-Copolymeren

In einem getrockneten und mit Stickstoff überlagerten 2L-Stahlreaktor wurden unter Rühren vorgelegt: 850 g Hexan, 4,13 mmol (BDMAEE) Bis-[2-(N,N-dimethylamino)ethyl]ether (B), 0,69 (Na-DMO) mmol Natrium-3,7-dimethyl-3-octylat (C) (als 50%-ige Lösung in Hexan), 112 g 1,3-Butadien, 38 g Styrol, 1,38 mmol (Bu-Li) *n*-Butyllithium (A) (als 23%-ige Lösung in Hexan). Es wurde unter Rühren 60 Minuten auf 80°C erwärmt. Danach wurde die Kautschuklösung in Ethanol ausgefällt und mit 2,6-Di-tert-butyl-4-kresol (BHT) stabilisiert. Der ausgefällte Kautschuk wurde von Ethanol abgetrennt und 16 h im Vakuum bei 60°C getrocknet.

### Analys energebniss e:

Vinyl-Gehalt (¹H-NMR; bezogen auf den Butadienanteil im Polymeren): 87 Gew.-%
Styrol-Gehalt (¹H-NMR): 26 Gew.-%
Glasübergangstemperatur Tg (DSC): 9°C
Mooney-Viskosität (ML1+4 bei 100°C): 72 Mooney-Einheiten

Die Beispiele 2B bis 2J wurden in entsprechender Weise mit den in Tabelle 2 angegebenen Initiatorsystemen, Polymerisationstemperaturen und Mengenverhältnissen durchgeführt.

Die erfindungsgemäßen Beispiele 2A bis 2E zeigen, dass mit dem erfindungsgemäßen Initiatorsystem Styrol-Butadien-Copolymere mit sehr hohem Vinylgehalt und sehr hoher Glasübergangstemperatur bei hohen Polymerisationstemperaturen hergestellt werden können. Mit den Vergleichssystemen der Beispiele 2F bis 2J ist dies nicht zu erreichen.

**Tabelle 1: Initiatorsystem, Polymerisationsbedingungen und Produkteigenschaften der Polybutadiene:**

| Beispiel | Art | Mikrostrukturregler (B) | Natriumalkoxid (C) | BuLi (A) [mmol] | Verhältnis (B):(A) [mol/mol] | Verhältnis (C):(A) [mol/mol] | Polymerisationstemperatur [°C] | Vinylgehalt [Gew.-%] | Tg (DSC) [°C] | ML1+4 (100°C) [ME] | Umsatz [%] |
|---|---|---|---|---|---|---|---|---|---|---|---|
| 1A | E | BDMAEE | Na-DMO | 0,58 | 3:1 | 1:2 | 80 | 94 | -5 | 95 | 97 |
| 1B | E | BDMAEE | Na-DMO | 0,58 | 1:1 | 1:2 | 80 | 92 | -6 | 83 | >98 |
| 1C | E | BDMAEE | Na-DMO | 0,75 | 1:1 | 1:2 | 80 | 93 | -6 | 64 | >98 |
| 1D | E | BDMAEE | Na-DMO | 0,58 | 1:2 | 1:2 | 80 | 91 | -11 | 67 | >98 |
| 1E | E | BDMAEE | Na-DMO | 0,58 | 1:1 | 1:1 | 80 | 93 | -6 | 98 | >98 |
| 1F | E | BDMAEE | Na-DMO | 0,58 | 1:1 | 1:4 | 80 | 93 | -9 | 60 | 97 |
| 1G | E | BDMAEE | Na-DMO | 0,58 | 1:1 | 1:2 | 90 | 93 | -7 | 97 | >98 |
| 1H | E | BDMAEE | Na-DMO | 0,58 | 1:1 | 1:2 | 100 | 93 | -6 | 94 | >98 |
| 1I | E | BDMAEE | Na-Menth. | 0,58 | 3:1 | 1:2 | 80 | 93 | -6 | 92 | >98 |
| 1J | V | BDMAEE | - | 0,75 | 6:1 | - | 80 | 86 | -20 | 46 | 92 |
| 1K | V | BDMAEE | - | 0,58 | 3:1 | - | 80 | 84 | -23 | 56 | 95 |
| 1L | V | BDMAEE | - | 0,58 | 1:1 | - | 80 | 81 | -28 | 39 | 94 |
| 1M | V | BDMAEE | - | 0,58 | 1:1 | - | 100 | 68 | -45 | 31 | 93 |
| 1N | V | - | Na-DMO | 0,58 | - | 1:2 | 80 | 47 | -64 | 73 | >98 |
| 1O | V | BEE | Na-DMO | 0,58 | 1:1 | 1:2 | 80 | 74 | -36 | 68 | >98 |
| 1P | V | BEE | Na-DMO | 0,58 | 3:1 | 1:2 | 80 | 78 | -31 | 62 | >98 |
| 1Q | V | BEE | Na-DMO | 0,58 | 3:1 | 1:2 | 100 | 74 | -36 | 63 | >98 |
| 1R | V | DTHFP | Na-DMO | 0,58 | 1:1 | 1:2 | 80 | 69 | -43 | 63 | >98 |
| 1S | V | DTHFP | Na-DMO | 0,58 | 3:1 | 1:2 | 80 | 71 | -41 | 70 | >98 |
| 1T | V | TMEDA | Na-DMO | 0,58 | 1:1 | 1:2 | 80 | 76 | -35 | 59 | >98 |
| 1U | V | TMEDA | Na-DMO | 0,58 | 3:1 | 1:2 | 80 | 82 | -25 | 54 | 98 |
| 1V | V | TMEDA | Na-DMO | 0,58 | 1:1 | 1:2 | 100 | 71 | -41 | 64 | >98 |
| 1W | V | TMEDA | Na-DMO | 0,58 | 3:1 | 1:2 | 100 | 80 | -28 | 54 | >98 |

| | | | | | | | | | | | |
|---|---|---|---|---|---|---|---|---|---|---|---|
| Mit BDMAEE = Bis-[2-(N,N-dimethylamino)ethyl]ether, DTHFP = 2,2-Di(2-tetrahydrofuryl)propan, Na-DMO = Natrium-3,7-dimethyl-3-octylat, BEE = 2-(2-Ethoxyethoxy)-2-methylpropan, TMEDA = N,N,N',N'-Tetramethylethylendiamin, Na-Menth. = Natriummentholat, E = erfindungsgemäß und V= Vergleich | | | | | | | | | | | |

**Tabelle 2: Polymerisationsbedingungen und Produkteigenschaften der Styrol-Butadien-Copolymere**

| Beispiel | Art | Mikrostrukturregler (B) | Natriumalkoxid (C) | Verhältnis (B):(A) [mol/mol] | Verhältnis (C):(A) [mol/mol] | Polymerisationstemperatur [°C] | Vinylgehalt [Gew.-%] | Styrol-gehalt [Gew.-%] | Tg (DSC) [°C] | ML1+4 (100°C) [ME] | Umsatz [%] |
|---|---|---|---|---|---|---|---|---|---|---|---|
| 2A | E | BDMAEE | Na-DMO | 3:1 | 1:2 | 80 | 87 | 26 | 9 | 72 | >98 |
| 2B | E | BDMAEE | Na-DMO | 1:1 | 1:2 | 80 | 88 | 26 | 8 | 42 | >98 |
| 2C | E | BDMAEE | Na-Menth. | 1:1 | 1:2 | 80 | 87 | 26 | 8 | 66 | >98 |
| 2D | E | BDMAEE | Na-DMO | 1:4 | 1:2 | 80 | 83 | 26 | 1 | 17 | >98 |
| 2E | E | BDMAEE | Na-DMO | 1:1 | 1:2 | 100 | 87 | 26 | 6 | 58 | >98 |
| 2F | V | BDMAEE | - | 3:1 | - | 80 | 72 | 27 | -9 | 37 | 96 |
| 2G | V | BEE | Na-DMO | 3:1 | 1:2 | 80 | 73 | 26 | -10 | 21 | >98 |
| 2H | V | DTHFP | Na-DMO | 3:1 | 1:2 | 80 | 65 | 26 | -18 | 37 | >98 |
| 2I | V | TMEDA | Na-DMO | 1:1 | 1:2 | 80 | 74 | 26 | -7 | 19 | >98 |
| 2J | V | TMEDA | Na-DMO | 3:1 | 1:2 | 80 | 76 | 26 | -5 | 33 | >98 |

## Patentansprüche

1. Initiatorsystem für die anionische Polymerisation enthaltend
(A) mindestens eine Organolithiumverbindung,
(B) mindestens einen Di(aminoalkyl)ether und
(C) mindestens ein Natriumalkoxid und/oder Natriumphenoxid.

2. Initiatorsystem nach Anspruch 1, **dadurch gekennzeichnet, dass** die Organolithiumverbindung (A) eine Verbindung der Formel (I)
R-Li (I)
ist,
wobei R für einen gegebenenfalls substituierten Alkylrest mit 1 bis 32 C-Atomen, für einen gegebenenfalls substituierten Cycloalkylrest mit 3 bis 32 C-Atomen oder für einen gegebenenfalls substituierten Arylrest mit 5 bis 36 C-Atomen, der gegebenenfalls ein oder mehrere Heteroatome enthalten kann oder für einen sekundären aliphatischen, cycloaliphatischen oder aromatischen Aminrest steht.

3. Initiatorsystem nach Anspruch 2, **dadurch gekennzeichnet, dass** es sich bei der Organolithiumverbindung um *n*-Butyllithium und/oder *sec*-Butyllithium handelt.

4. Initiatorsystem nach Anspruch 2, **dadurch gekennzeichnet, dass** es sich bei den Di(aminoalkyl)ethern (B) um Verbindungen der Formel (II) 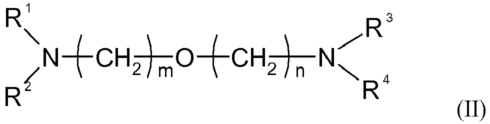 handelt, wobei
R¹, R², R³, R⁴ gleich oder verschieden sind und für Alkylreste mit 1 bis 12 C-Atomen, Cycloalkylreste mit 3 bis 8 C-Atomen, Arylreste mit 6 bis 10 C-Atomen und für Aralkylreste mit 7 bis 15 C-Atomen stehen,
m, n gleich oder verschieden sind und für ganze Zahlen von 1 bis 8 stehen.

5. Initiatorsystem nach einem oder mehreren der Ansprüche 1 bis 4, **dadurch gekennzeichnet, dass** es sich bei dem Natriumalkoxid und/oder Natriumphenoxid (C) um eine Verbindung der Formel (III)
Na-OR' (III)
handelt,
wobei R' einen linearen, verzweigten, gesättigten oder ungesättigten gegebenenfalls substituierten C₁-C₃₀-Alkyl-, C₃-C₁₈-Cycloalkyl- oder C₆-C₁₈-Arylrest darstellt, der gegebenenfalls ein oder mehrere Heteroatome aufweist.

6. Initiatorsystem nach Anspruch 5, **dadurch gekennzeichnet, dass** es sich bei den Verbindungen der Formel (III) um Natriummethylat, Natriumethylat, Natrium-*n*-propylat, Natriumisopropylat, Natrium-*n*-butylat, Natrium-*sec*-butylat, Natrium-*tert*-butylat, Natrium-*n*-pentylat, Natrium-*iso*-pentylat, Natriumhexylat, Natriumcyclohexylat, Natrium-2,4-dimethyl-3-pentylat, Natriumoctylat, Natrium-2-ethylhexylat, Natriumdecylat, Natrium-3,7-dimethyl-3-octylat, Natriummentholat, Natriumtetrahydrofurfurylat, Natriumphenylat, Natrium-p-nonylphenylat und/oder Natrium-p-decylphenylat handelt.

7. Initiatorsystem nach einem oder mehreren der Ansprüche 1 bis 6, **dadurch gekennzeichnet, dass** das molare Verhältnis der Verbindung (B) zu Verbindung (A) 0,01:1 bis 100:1 beträgt.

8. Initiatorsystem nach einem oder mehreren der Ansprüche 1 bis 7, **dadurch gekennzeichnet, dass** das molare Verhältnis der Verbindung (C) zu Verbindung (B) 0,005:1 bis 100:1 beträgt.

9. Initiatorsystem nach einem oder mehreren der Ansprüche 1 bis 8, **dadurch gekennzeichnet, dass** das molare Verhältnis der Verbindung (C) zu Verbindung (A) 0,02:1 bis 50:1 beträgt.

10. Verfahren zur Herstellung des Initiatorsystems nach einem oder mehreren der Ansprüche 1 bis 9, **dadurch gekennzeichnet, dass** die Komponenten (A) bis (C) vermischt werden.

11. Verfahren zur Herstellung von Dienhomo- und/oder Diencopolymeren mit einem auf die Dienkomponente bezogenen Vinylgehalt von > 60 %, **dadurch gekennzeichnet, dass** die Diene und gegebenenfalls vinylaromatischen Comonomere mit dem Initiatorsystem nach einem oder mehreren der Ansprüche 1 bis 9 umgesetzt werden.

12. Verfahren nach Anspruch 11, **dadurch gekennzeichnet, dass** die Umsetzung bei Polymerisationstemperaturen von > 60°C durchgeführt wird.

13. Verfahren nach Anspruch 11 oder 12, **dadurch gekennzeichnet, dass** entweder zunächst die Diene und gegebenenfalls vinylaromatischen Comonomere vorgelegt werden und anschließend das Initiatorsystem oder die einzelnen Komponenten des Initiatorsystems in beliebiger Reihenfolge zugegeben werden oder dass die Komponenten (A) bis (C), die Diene und gegebenenfalls vinylaromatischen Comonomere sowie das Lösungsmittel kontinuierlich in den Reaktor dosiert werden.

14. Verfahren nach einem oder mehreren der Ansprüche 11 bis 13, **dadurch gekennzeichnet, dass** als Diene 1,3-Butadien, Isopren, 1,3-Pentadien, 2,3-Dimethylbutadien, 1-Phenyl-1,3-butadien und/oder 1,3-Hexadien und als vinylaromatische Comonomere Styrol, o-, mund/oder p-Methylstyrol, p-*tert*-Butylstyrol, α-Methylstyrol, Vinylnaphthalin, Divinylbenzol, Trivinylbenzol und/oder Divinylnaphthalin eingesetzt werden.

15. Verwendung des Initiatorsystems nach einem oder mehreren der Ansprüche 1 bis 9 zur Herstellung von Dienhomo- und/oder Diencopolymeren mit einem auf die Dienkomponente bezogenen Vinylgehalt von > 60 %.

## Claims

1. Initiator system for anionic polymerization comprising
(A) at least one organolithium compound,
(B) at least one di(aminoalkyl) ether and
(C) at least one sodium alkoxide and/or sodium phenoxide.

2. Initiator system according to Claim 1, **characterized in that** the organolithium compound (A) is a compound of the formula (I)
R-Li (I),
where R is an optionally substituted alkyl moiety having from 1 to 32 carbon atoms, an optionally substituted cycloalkyl moiety having from 3 to 32 carbon atoms or an optionally substituted aryl moiety having from 5 to 36 carbon atoms, which optionally can contain one or more heteroatoms, or R is a secondary aliphatic, cycloaliphatic or aromatic amine moiety.

3. Initiator system according to Claim 2, **characterized in that** the organolithium compound is *n*-butyllithium and/or *sec*-butyllithium.

4. Initiator system according to Claim 2, **characterized in that** the di(aminoalkyl) ethers (B) are compounds of the formula (II) 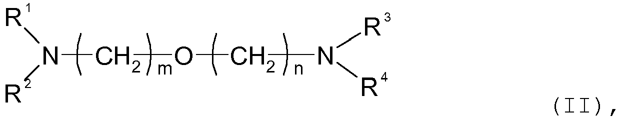 where
R¹, R², R³ and R⁴ are identical or different and are alkyl moieties having from 1 to 12 carbon atoms, cycloalkyl moieties having from 3 to 8 carbon atoms, aryl moieties having from 6 to 10 carbon atoms, or aralkyl moieties having from 7 to 15 carbon atoms,
m and n are identical or different and are whole numbers from 1 to 8.

5. Initiator system according to one or more of Claims 1 to 4, **characterized in that** the sodium alkoxide and/or sodium phenoxide (C) is a compound of the formula (III)
Na-OR' (III),
where R' is a linear, branched, saturated or unsaturated optionally substituted C₁-C₃₀-alkyl, C₃-C₁₈-cycloalkyl or C₆-C₁₈-aryl moiety which optionally contains one or more heteroatoms.

6. Initiator system according to Claim 5, **characterized in that** the compounds of the formula (III) are sodium methanolate, sodium ethanolate, sodium *n*-propanolate, sodium isopropanolate, sodium *n*-butanolate, sodium *sec-*butanolate, sodium *tert*-butanolate, sodium *n*-pentanolate, sodium *iso*-pentanolate, sodium hexanolate, sodium cyclohexanolate, sodium 2,4-dimethyl-3-pentanolate, sodium octanolate, sodium 2-ethylhexanolate, sodium decanolate, sodium 3,7-dimethyl-3-octanolate, sodium mentholate, sodium tetrahydrofurfuranolate, sodium phenolate, sodium p-nonylphenolate and/or sodium p-decylphenolate.

7. Initiator system according to one or more of Claims 1 to 6, **characterized in that** the molar ratio of the compound (B) to compound (A) is from 0.01:1 to 100:1.

8. Initiator system according to one or more of Claims 1 to 7, **characterized in that** the molar ratio of compound (C) to compound (B) is from 0.005:1 to 100:1.

9. Initiator system according to one or more of Claims 1 to 8, **characterized in that** the molar ratio of compound (C) to compound (A) is from 0.02:1 to 50:1.

10. Process for the production of the initiator system according to one or more of Claims 1 to 9, **characterized in that** components (A) to (C) are mixed.

11. Process for the production of diene homopolymers and/or diene copolymers having vinyl content of > 60%, based on the diene component, **characterized in that** the dienes and optionally vinylaromatic comonomers are reacted with the initiator system according to one or more of Claims 1 to 9.

12. Process according to Claim 11, **characterized in that** the reaction takes place at polymerization temperatures of > 60°C.

13. Process according to Claim 11 or 12, **characterized in that** either the dienes and optionally vinylaromatic comonomers are first used as initial charge and then the initiator system or the individual components of the initiator system are added in any desired sequence or components (A) to (C), the dienes and optionally vinylaromatic comonomers, and also the solvent, are metered continuously into the reactor.

14. Process according to one or more of Claims 11 to 13, **characterized in that** the dienes used comprise 1,3-butadiene, isoprene, 1,3-pentadiene, 2,3-dimethylbutadiene, 1-phenyl-1,3-butadiene and/or 1,3-hexadiene, and the vinylaromatic comonomers used comprise styrene, o-, m- and/or p-methylstyrene, p-*tert*-butylstyrene, α-methylstyrene, vinylnaphthalene, divinylbenzene, trivinylbenzene and/or divinylnaphthalene.

15. Use of the initiator system according to one or more of Claims 1 to 9 for the production of diene homopolymers and/or diene copolymers having vinyl content of > 60%, based on the diene component.

## Revendications

1. Système initiateur pour la polymérisation anionique, contenant :
(A) au moins un composé d'organolithium,
(B) au moins un éther di(aminoalkylique) et
(C) au moins un alcoxyde de sodium et/ou un phénoxyde de sodium.

2. Système initiateur selon la revendication 1, **caractérisé en ce que** le composé d'organolithium (A) est un composé de formule (I)
R-Li (I)
dans laquelle R représente un radical alkyle éventuellement substitué de 1 à 32 atomes C, un radical cycloalkyle éventuellement substitué de 3 à 32 atomes C ou un radical aryle éventuellement substitué de 5 à 36 atomes C, qui peut éventuellement contenir un ou plusieurs hétéroatomes, ou un radical amino secondaire aliphatique, cycloaliphatique ou aromatique.

3. Système initiateur selon la revendication 2, **caractérisé en ce que** le composé d'organolithium est le n-butyllithium et/ou le sec-butyllithium.

4. Système initiateur selon la revendication 2, **caractérisé en ce que** les éthers di(aminoalkyliques) (B) sont des composés de formule (II) 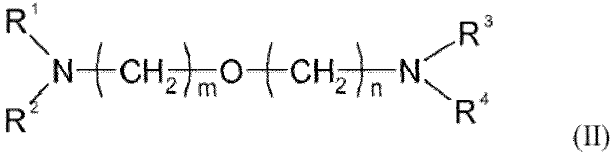 dans laquelle
R¹, R², R³, R⁴ sont identiques ou différents, et représentent des radicaux alkyle de 1 à 12 atomes C, des radicaux cycloalkyle de 3 à 8 atomes C, des radicaux aryle de 6 à 10 atomes C et des radicaux aralkyle de 7 à 15 atomes C,
m, n sont identiques ou différents, et représentent des nombres entiers de 1 à 8.

5. Système initiateur selon une ou plusieurs des revendications 1 à 4, **caractérisé en ce que** l'alcoxyde de sodium et/ou le phénoxyde de sodium (C) sont un composé de formule (III)
Na-OR' (III)
dans laquelle R' représente un radical alkyle en C₁-C₃₀, cycloalkyle en C₃-C₁₈ ou aryle en C₆-C₁₈ linéaire, ramifié, saturé ou insaturé, éventuellement substitué, qui comprend éventuellement un ou plusieurs hétéroatomes.

6. Système initiateur selon la revendication 5, **caractérisé en ce que** les composés de formule (III) sont le méthylate de sodium, l'éthylate de sodium, le n-propylate de sodium, l'isopropylate de sodium, le n-butylate de sodium, le sec-butylate de sodium, le tert-butylate de sodium, le n-pentylate de sodium, l'iso-pentylate de sodium, l'hexylate de sodium, le cyclohexylate de sodium, le 2,4-diméthyl-3-pentylate de sodium, l'octylate de sodium, le 2-éthylhexylate de sodium, le décylate de sodium, le 3,7-diméthyl-3-octylate de sodium, le mentholate de sodium, le tétrahydrofurfurylate de sodium, le phénylate de sodium, le p-nonylphénylate de sodium et/ou le p-décylphénylate de sodium.

7. Système initiateur selon une ou plusieurs des revendications 1 à 6, **caractérisé en ce que** le rapport molaire entre le composé (B) et le composé (A) est de 0,01:1 à 100:1.

8. Système initiateur selon une ou plusieurs des revendications 1 à 7, **caractérisé en ce que** le rapport molaire entre le composé (C) et le composé (B) est de 0,005:1 à 100:1.

9. Système initiateur selon une ou plusieurs des revendications 1 à 8, **caractérisé en ce que** le rapport molaire entre le composé (C) et le composé (A) est de 0,02:1 à 50:1.

10. Procédé de fabrication du système initiateur selon une ou plusieurs des revendications 1 à 9, **caractérisé en ce que** les composants (A) à (C) sont mélangés.

11. Procédé de fabrication d'homo- et/ou de copolymères diéniques ayant une teneur en vinyle relative au composant diénique > 60 %, **caractérisé en ce que** les diènes et éventuellement des comonomères aromatiques de vinyle sont mis en réaction avec le système initiateur selon une ou plusieurs des revendications 1 à 9.

12. Procédé selon la revendication 11, **caractérisé en ce que** la réaction est réalisée à des températures de polymérisation > 60 °C.

13. Procédé selon la revendication 11 ou 12, **caractérisé en ce que** soit tout d'abord les diènes et éventuellement des comonomères aromatiques de vinyle sont chargés initialement, puis le système initiateur ou les composants individuels du système initiateur sont ajoutés dans un ordre quelconque, soit les composants (A) à (C), les diènes et éventuellement des comonomères aromatiques de vinyle, ainsi que le solvant sont introduits en continu dans le réacteur.

14. Procédé selon une ou plusieurs des revendications 11 à 13, **caractérisé en ce qu'**en tant que diènes, le 1,3-butadiène, l'isoprène, le 1,3-pentadiène, le 2,3-diméthylbutadiène, le 1-phényl-1,3-butadiène et/ou le 1,3-hexadiène sont utilisés, et, en tant que comonomères aromatiques de vinyle, le styrène, l'o-, le m- et/ou le p-méthylstyrène, le p-tert.-butylstyrène, l'α-méthylstyrène, la vinylnaphtaline, le divinylbenzène, le trivinylbenzène et/ou la divinylnaphtaline sont utilisés.

15. Utilisation du système initiateur selon une ou plusieurs des revendications 1 à 9 pour la fabrication d'homo- et/ou de copolymères diéniques ayant une teneur en vinyle relative au composant diénique > 60 %.
